# EUROPEAN PATENT SPECIFICATION

(11) **EP 0 697 997 B1**
(45) Date of publication and mention of the grant of the patent: **19.01.2000**
(21) Application number: 94914675.7
(22) Date of filing: 28.04.1994
(51) Int. Cl.: C01G 9/02

(54) **ELONGATE ZINC OXIDE PARTICLES AND A METHOD FOR THE PRODUCTION THEREOF**
LÄNGLICHE ZINKOXYDPARTIKEL UND VERFAHREN ZU DEREN HERSTELLUNG
PARTICULES D'OXYDE DE ZINC ALLONGEES ET LEUR PROCEDE DE PRODUCTION

(30) Priority: 28.04.1993 SE 9301441
(43) Date of publication of application: 28.02.1996
(73) Proprietor: MUHAMMED, Mamoun, S-182 61 Djursholm (SE)
(72) Inventor: MUHAMMED, Mamoun, S-182 61 Djursholm (SE)
(74) Representative: Berg, Sven Anders
(86) International application number: SE9400383
(87) International publication number: WO9425397

(56) References cited:
- EP-A- 0 272 964
- EP-A- 0 317 272
- EP-A- 0 405 364
- WO-A-92/01631
- DE-A- 4 023 802

## Description

This invention relates to ultrafine zinc oxide particles of defined size and morphology. The invention also relates to methods for the production of such ultrafine particles and to bicarbonate, carbonate and oxalate precursors precipitated from an aqueous zinc ion solution with a carbonate source and optionally calcined. The invention further relates to the production of doped ultrafine zinc oxide, bicarbonate, carbonate or oxalate particles simultaneously or sequentially coprecipitated with dopant metals.

Zinc oxide is currently prepared in many physical forms each suited to different applications. For instance, the photochemical properties of zinc oxide are dependant not only on particle size but also on particle morphology as are various other features important in cosmetic sunscreen and paint pigment formulation such as skin feel and viscosity. US patent no. 5,032,390 is an example of a sunscreen formulation using spherical zinc oxide particles with diameters between 70 and 300 nm while US patent no. 5,093,099 formulates sunscreens with zinc oxide flakes.

Zinc oxide has semiconducting properties which are utilised in the electronics industry and as static dispersants in the manufacture of carpets and plastics. These properties of zinc oxide are also dependant to some extent on the morphology and particle size. For instance, it has been recognized that particles with an aspect ratio greater than 1, i.e. fibres and whiskers, provide more intimate electrical contact. US patent nos. 5,066,475 and 5,091,765 describe the formation of whiskers useful in photoconductive cells, electronic parts such as varistors and even as fillers and reinforcing fibres in composite materials, through the aerobic pyrolysis of zinc.

This classic preparative route, dry pyrolysis of zinc in air, produces a quite limited range of micron-sized zinc oxide granules, whiskers and needles. Another classic technique requires the reaction of zinc metal with carbon monoxide or carbon dioxide at elevated temperatures to produce a zinc carbonate which is subsequently calcined to zinc oxide. Because of the stability of carbonates produced in this manner, very high temperatures are required for the calcination step ruling out the capability to adequately control size and morphology of the end product.

US patent no 4,193,769 proposes an alternative technique to facilitate production of sub-micron zinc oxide particles, useful as fillers and pigments. In this technique, zinc carbonates are dispersed in a non volatile fluid such as mineral or silicone oils and subjected to explosive decomposition at a temperature up to 400°. This technique produces smaller ZnO particles at a somewhat lower preparation temperature than the classic calcination route, but requires the troublesome separation of the particles from the non volatile dispersant fluid.

In the cosmetics field, US patent no. 5,093,099 describes the production of ZnO flakes with an average diameter of 100 to 1000 nm and a thickness of the order of 100 or 200 nm, using a precipitation technique. This technique precipitates ZnO directly from a zinc ion/acid radical or zincate solution at relatively moderate temperatures. Suitable acid radicals or precipitants for the zincates are said to include carbonates and oxalates but the patent emphasises the importance of maintaining the pH over 11 during precipitation in order to avoid the formation of zinc hydroxides.

In the electroconduction field, US patent no. 5,102,650 describes a technique in which doped zinc oxide fillers are precipitated from zincates with inorganic acids. The dopants include tin, gallium, indium and aluminium oxides rendering the electrically conducting fillers useful in paper, plastics and paints. Co-precipitation of the ZnO and dopant gives particles which are subsequently calcined at temperatures between 400 and 800°C to produce needle-like powder with particle diameters around 200 nm and lengths around 5 microns.

US patent no. 5,132,104 also describes a co-precipitation technique for the production of doped zinc oxide crystals, this time by calcining the precipitate from a carbonate/ammonium/zincate solution. Inherent in this technique is that the initial solution includes all the precipitant ions and is prepared at a very high pH value which is subsequently lowered to cause precipitation of a monoammine complex of zinc carbonate. To perform this reduction in pH, mineral and organic acids and gaseous carbon dioxide are proposed, however the mother liquor already contains high concentrations of dissolved carbonate [CO₃]/[Zn]= 0.5 to 3.5 to form the precipitate. The mother liquor also has a high ammonia to carbonate ratio, leading to large, stable endproducts. The complex is clearly robust in that it is subsequently washed in polar organic solvents and calcined at moderately high temperatures between 300 and 400°C to produce relatively large and unevenly distributed doped zinc oxide crystals with lengths between 10 and 100 microns and diameters between 0.5 and 10 microns.

Within the catalyst art, US patent no. 3,441,370 proposes the wet precipitation of zinc carbonate from zinc nitrate and sodium carbonate, at above room temperatures and apparently at somewhat elevated pH, followed by filtration and calcination to zinc oxide. No attempt is made to control the morphology and size of the zinc oxide particles which are not otherwise described except by extrudability and surface area. It should, however, be recognized that particle morphology in the catalyst art is not generally an important consideration as long as the necessary reactive surface area is achieved.

The object of the present invention is to provide ultrafine zinc oxide, carbonates and oxalates with defined particle morphologies. A further object is to provide techniques for the production of such defined morphology particles which avoid the deficiencies of the prior art precipitation, calcination or decomposition steps and which are amenable to simultaneous or sequential co-precipitant doping.

A first aspect of the invention provides zinc oxide particles in a novel form, namely rods or fibres in the size range 50 to 500 and even up to 1000 nm in length, preferably between 100 to 150 nm and 10 to 150 nm in diameter, preferably about 50 to 150 nm. The rods and fibres will generally have a circular cross section and comprise X-ray amorphous material. As used in this specification 'rods' have an aspect ratio of the order of 2 or 3 while 'fibres' have an aspect ratio in excess of 3.

Typically the particles will display a very homogenous size and aspect ratio distribution with micrographs of the rods showing greater than 75% and even up to 90% of the particles having a substantially similar size and aspect ratio. For instance, within a rod population of nominal aspect ratio 3 and diameter 100 nm, it is possible to produce populations in which 75% of the particles fall within an aspect ratio range of 2-4 and diameter range 50 to 150 nm which represents outstanding homogeneity in comparison to prior art methods.

Such zinc oxide particles with defined sizes and morphologies including those produced by the techniques below show interesting rheological properties and find utility in the various applications discused in the prior art part of this specification.

As electroconductors, the controlled morphology particles of the invention can be used as fillers incorporated at conventional proportions into papers, plastics, rubbers, resins, fabrics, carpets and paints to provide low specific volume resistance. Particles with higher aspect ratios are generally preferred in these applications to enhance interparticle contact and thereby increase conductivity/unit weight. The rheological properties of the particles assure enhanced dispersability within the paint, polymer etc substrate.

Electronic applications include the construction of photoelectric devices and other electronic components, where the ultrafine size and even size distribution assist semiconducting roles. Electronic components such as varistors will generally favour higher aspect ratios.

A major use of zinc oxide particles is as pigments and sun protective agents in paints and dermal sunscreens. The rheological and absorbance properties of the controlled morphology particles of the present invention are expected to be useful in these roles also.

A second aspect of the invention provides a method for the production of ultrafine zinc precipitates in which zinc ions, ammonium ions and a carbonate source are brought into mutual contact in an aqueous solution to form a precipitate, the resulting precipitate is separated and optionally calcined to zinc oxide, characterized in that a metastable precipitate is formed in which the morphology and size of the particles is controlled by providing, prior to and during precipitation;
a temperature between 10 and 40 °C, preferably 15 to 30 °C and more preferably 20 to 22 °C;
a pH between 5 and 10;
and wherein the zinc ion and/or carbonate source is progressively made available to the solution at a precipitation limiting rate.

The above defined method is in contrast to prior art methods in which a high pH solution of all the precipitant ions (with the zinc as zincate) is caused to precipitate by the lowering of the pH. By initially setting the pH of the mother liquor, the present invention avoids the production of undesirable high pH artifacts such as microprecipitates of ZnOH which can act as seeds for the uncontrolled growth of zinc carbonate complexes. In this fashion, high quality, substantially uniform metastable complexes can be reproduceably precipitated with sizes and morphologies giving interesting rheological properties.

The invention further provides ultrafine precipitates, especially zinc oxide particles, of controlled size and morphology produced by the above method and defining substantially homogeneous populations of spheres, rods or fibres with a narrow diameter and aspect ratio distribution.

The precipitate which forms as a metastable mixed complex of zinc, or zinc and some other cation such as ammonium or a dopant, and hydroxy, bicarbonate, carbonate or oxalate etc. may be recovered as the salt by conventional techniques or alternatively may be calcined to produce zinc oxide particles. The calcination temperature will depend to some extent on the exact nature of the carbonate moiety but the metastable nature of the precipitate will generally allow the use of comparatively low calcination temperatures in comparison with classic carbonate decomposion. For instance, calcination temperatures as low as 250 - 340 °C, perhaps even 200 °C are achievable in comparison to the 400 - 800 °C required in classic carbonate calcinations. Oxalates and other bicarboxylates may even employ lower calcination tempertures, such as 120 °C.

The precipitates of the invention are metastable and therefore prolonged contact with the chemically reactive environment of the mother liquor will tend to cause maturing or ripening. Prior to physical separation of the precipitate, it can be chemically isolated, to some extent, from its chemical enviroment. For instance, manipulation of the dissolved carbon dioxide concentration can delay ripening in solution, prior to filtration or centrifugal separation. The precipitates are not water sensitive, unlike the prior art zincate precipitation techniques of US 5,132,104 which require washing of the separated precipitate in polar organic solvents such as acetone or ethanol.

The separation technique may include an initial surface charge neutralization step of coating the surface of the precipitate suspension with a surfactant such as methacrylate followed by spray drying. Calcination of the resultant particles will tend to volatilise any surfactant residues remaining after the spray drying operation.

Spray roasting, in which the precipitate-containing solution is sprayed into a heated chamber at temperatures approaching 270 °C can simultaneously effect dewatering and calcination. Filtration, leading to a more densely packed arrangement can also be used, optionally in conjunction with surfactant based redispersion techniques.

The expression 'carbonate source' includes carbonates, bicarbonates, oxalates, malates, succinates and also carbon dioxide introduced into the aqueous solution as a gaseous phase or evolved in situ through dissolution or decomposition. Precursors giving a carbonate source in situ include carbamate and urea. Ammonium salts are preferred especially when the resultant zinc oxide is intended for applications in which metal ion contamination should be avoided, such as dermal sunscreens and electrostatic applications. Such an ammonium salt may comprise the sole source of ammonium ion in the aqueous solution.

Preferred zinc salts to produce the aqueous zinc solution include the nitrate, sulphate and chloride. The solution may be pure water or a mixture of water and another miscible or immiscible solvent such as an alcohol or acetonitrile.

Control of the relative availability of carbonate to zinc ion concentration within the aqueous solution to a precipitation limiting rate can be simply achieved by the gradual addition of the carbonate source and/or zinc ion, in solid but preferably dissolved form, to the aqueous mother liquor. Alternatively, the reagents can be added in a form which decomposes to release and make available zinc ion or the carbonate source, For example, urea or preferably ammonium carbamate can release carbon dioxide and ammonia in a retarded fashion or with enhanced availability to ensure a suitably low reactive concentration. Metal chelators such as the EDTA family can maintain a low reactive zinc ion concentration in the aqueous solution. When carbon dioxide is used as the carbonate source it is convenient to bubble it through the aqueous solution, optionally in conjunction with a solubility regulator such as ammonia.

Control of the pH within the above defined range is advantageously carried out with dilute reagents such as 0.05 to 0.25 M KOH or NaOH, in conjunction with vigourous mixing. The preferred pH control agent is ammonium hydroxide, such as a 5-10 % ammonia in distilled water solution. The ratio of ammonium to carbonate source will generally be lower compared with prior art methods which may lead to enhanced metastability in the precipitated complexes. Ratios approaching unity are effective.

Controlling the relative availability of the various ions by progressively making available one or both of the zinc ion and carbonate source in reaction limiting amounts allows control of the aspect ratio of the resultant precipitant. Generally speaking, within the above defined process conditions, the slower the rate of reactant addition, the greater is the aspect ratio, i.e. the length of the rods or fibres. Conversely, increasing the addition rate will decrease the aspect ratio, however too rapid an addition will lead to the non-homogenous particle size distributions displayed by prior art techniques. Addition rates will vary with the strength and solubility of the reagents, but as a guide, for a 0.5 molar concentration of zinc ion, an addition rate between 0.5 and 2.0 litres/hour for a 0.4 molar equivalent carbonate source has been workable. It should, of course, be recognized that the hydrodynamics of the solution influence the intended morphology. In particular, in contrast to conventional crystal deposition techniques, high aspect ratios will demand effective mixing, even with relatively dilute reagents to avoid localized regions of aberrant reactant concentration.

The actual hydrodynamic conditions employed during precipitation will depend on reactor size, geometry, number of baffles etc but generally speaking will be as high as possible without inducing cavitation or other admission of air bubbles into the system. As a guide, a Reynolds number of at least some hundreds, preferably 8000 and above will be appropriate for many systems.

The process of the present invention allows doping of the zinc precipitate complex and any zinc oxide end products through co-precipitation of the zinc precipitate with a dopant such as yttrium, aluminium, gallium, platinum, bismuth, a lanthanide, curium, molybdenum, nickel, cobalt, antimony,chromium or other group III-VII compound. Doping can assist the semiconductor, catalytic or photoelectric properties of the particles. Typically 0.01 to 10 % of the resultant particles will comprise the dopant oxide.

Co-precipitation can be performed simultaneously with formation of the zinc oxide to produce homogeneous particles. The respective concentrations of dopant oxide to zinc oxide in the end product can be controlled through adjustment of their respective reagent concentrations in the mother liquor during precipitation.

Alternatively, doping can be performed sequentially by first forming a zinc carbonate core and then precipitating one or more layers of dopant over the core. The end product powders will than have the dopant on the zinc interface with very little solubility in the solid phase.

Doped particles of controlled size and morphology have many uses in the electronic and electroconductive fields. Populations of the particles- as spheres, but preferably as rods or fibres- can be tailored for specific roles.

An electroconductive composition may comprise a paint, polymer, paper, fabric or carpet substrate or base having the particles incorporated therein, typically in an amount corresponding to 0.01 to 25 wt%. Higher aspect ratios are generally preferred to enhance interparticle contact and thereby electrical conductivity. The elongate shape and ultrafine size of the present particles leads to good dispersability of the particles within the substrate allowing smaller quantities of the particles to be used in comparison to prior art electroconductive compositions.

Electronic components such as varistors may be formed from the doped zinc oxide particles by conventional compression sintering or by the multi step anneal sintering as described in US patent no 4,046,487. Alternatively, mixtures of the zinc oxide particles in conjunction with dopant additives can be sintered as in conventional techniques. Varistors are zinc oxide based ceramic semiconductor devices with highly non-linear current voltage characteristics. Major applications are in the field of voltage oversurge protection. In addition to ZnO they generally contain other metal oxides which aid device performance. A typical varistor contains 96.5 mol% ZnO, 0.5 mol% bismuth oxide, 1.0 mol% cobolt oxide, 1.0 antimony oxide and 0.5 mol% chromium oxide. This composition allows the varistor to not only absorb high energy from few to thousands of joules but also to be used in a wide range of currents- microamps to kiloamps.

The electrical properties of a varistor are largely determined by the barriers to electrostatic potential in the grain boundary region. This, to a large extent, intrinsically reflects the composition at the grain boundary, including the type and amount of metal oxides existing at the ZnO grain surface, degree of homogeneity in the mixing of the various oxides, morpologies of the particles and modes of electrical contacts developed. The particles of the inventon show great versatility in optimizing these parameters while using conventional sintering techniques.

Other electronic components also benefit from this electrochemical versatility such as photochemical components which may comprise a substrate, such as silicon, with one or more layers of the doped zinc oxide particles and other semiconductor materials.

The particles used in these electroconductive or electronic roles are preferably those produced by coprecipitation of the dopant metal, but may also be formed from the earlier described controlled morphology particles which have been surface doped by conventional techniques.

Several embodiments of the invention will now be exemplified by way of example only with reference to the accompanying Figures, in which;
Fig 1 is a flow diagram of a first process in accordance wth the invention and further discussed in Example 1;
Fig 2 is a scanning electron micrograph of spherically shaped zinc oxide particles produced by process of Example 1;
Fig 3 is a scanning electron micrograph of rod shaped zinc oxide particles produced by the process of Example 2;
Fig 4 is a scanning electron micrograph of fibre shaped zinc oxide particles produced by the process of Example 3;
Fig 5 is a flow diagram of a second process in accordance with the invention encompassing several embodiments and further discussed in Example 4.

### Example 1

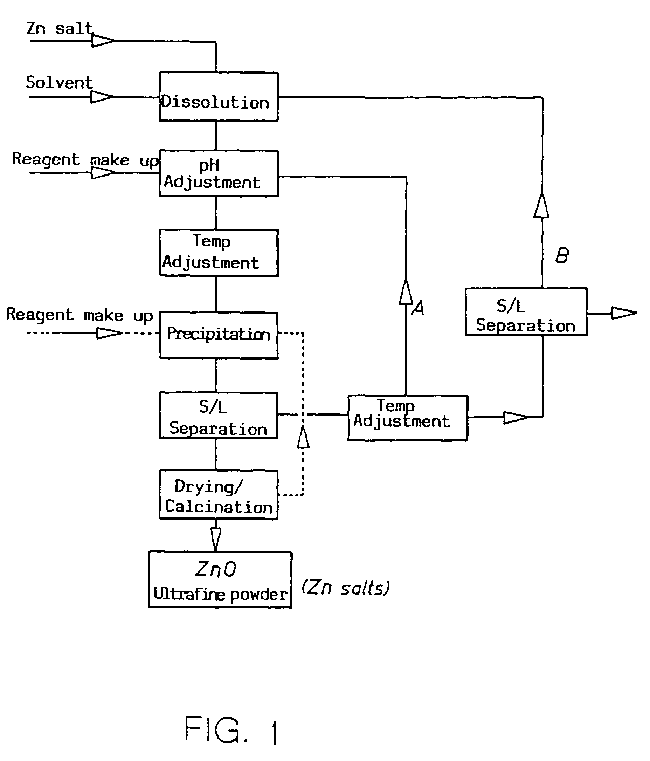

Referring initially to Fig 1, this Example includes the steps of forming an aqueous solution of a zinc ion, followed by pH and temperature adjustment. A gaseous carbon dioxide stream is introduced to the zinc solution while a pH and temperature feedback loop maintains precise control over the reaction environment. A precipitate comprising a mixed complex of zinc and hydroxide, bicarbonate and carbonate forms as the carbon dioxide is fed in. The metastable precipitate is separated from the mother liqour which is temperature treated to reform the reagents. The precipitate can be low temperature calcined to form an ultrafine ZnO powder of defined particle size and morphology to form a mixed complex of zinc and hydroxides, bicarbonates and carbonates.

In this Example, the reactor comprises a 2 litre cylinder equipped with vertically extending baffles around its circumference. Stirring was achieved with a central impeller which was speed governed to within 1% of the nominal rpm. Reagent addition to the reactor was via glass conduits opening into the reactor adjacent the impeller, thereby assuring instant mixing. Gaseous reagents were added via microporous sintered glass tips again adjacent the impeller.

A central microprocessor received input from pH, temperature and ion-selective probes mounted in the reactor and controlled peristaltic reagent input pumps and high precision reagent input valves. Bulk reagent vessels were equilibrated to the intended reaction temperature.

68.14 g of 99.81 % pure ZnCl was dissolved in 1.5 litres of distilled water and fed into the reactor. The temperature was reduced to 22 °C and maintained within a degree of this temperature, throughout the experiment. Stirring was set to 175 rpm. The pH was controlled with an ammonium solution comprising 8 % ammonia in distilled water which was very gradually added to the stirred solution so as to avoid localized pH perturbation. The pH was maintained in this fashion within the range 9 and 10 throughout the experiment.

A carbonate source comprising carbon dioxide gas 0.1 % (balance oxygen and nitrogen) was introduced to the solution at approximately 4.0 1/h. The precipitate formed instantly and the carbon dioxide inflow was continued until an appreciable amount of precipitate was dispersed in the reactor.

The precipitate was washed in distilled water and dried. The powder was X ray amorphous. The powder was calcined at 270 °C for 3 hours to form a white powder of submicron particles with a narrow size distribution and with a density of around 5.6 g/cm³ and surface area of 35 m²/g.

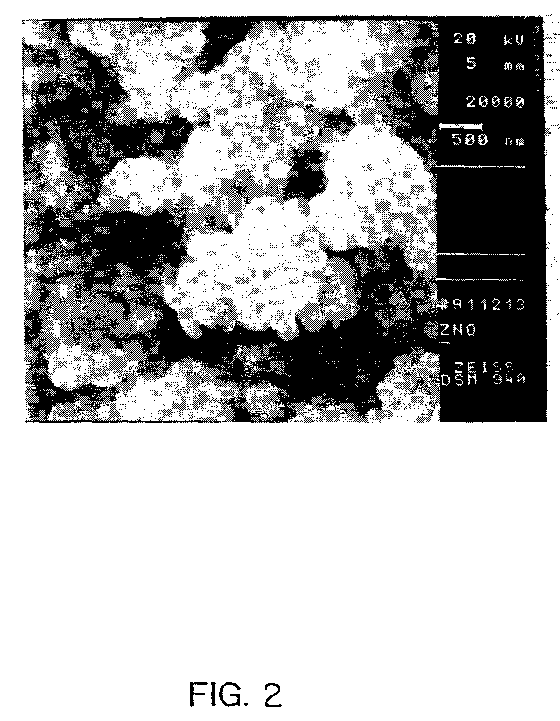

The powder was prepared for scanning electron microscopy by the gold coating method. As can be seen from the micrograph of Fig 2, these process conditions produced a sphere morphology with a diameter between 50 and 150 nm.

Referring once again to Fig 1, process refinements can include the recycling of the ammonia component, heat separated from the mother liquor after removal of the precipitate, back to the pH adjustment step, marked with the letter A in Fig 1. Additionally or alternatively, the liquid from this ammonia recovery step can be treated to recover the solvent which can also be recycled to provide a virtually closed environmentally friendly system ("B" in Fig 1).

### Example 2

The apparatus of Example 1 was charged with 1.5 l of distilled water. Stirring, temperature and pH control were also as in Example 1.

Aqueous 0.3 M zinc chloride and 0.2 M ammonium bicarbonate solutions were simultaneously added to the reactor via separate conduits at a respective rate of 0.5 l/h and 0.5 l/h. The resultant precipitate was separated as above.

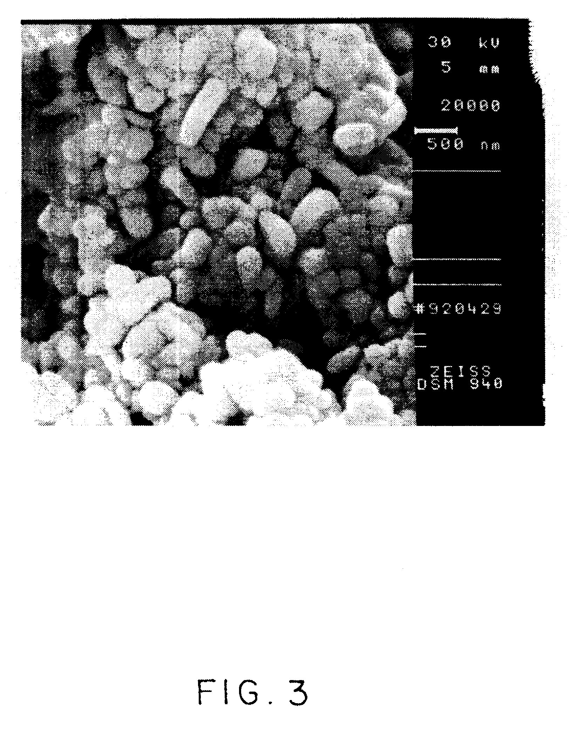

Calcination of the resultant precipitate was at 250 °C for 3 hours. Figure 3 shows the resultant zinc oxide particles which display a rod morphology with diameters between 50 to 100 nm and lengths between 100 to 200 nm.

When carbon dioxide is used as the precipitant, an additional recycling possibility is to collect carbon dioxide from the calcination step for use as the precipitant, as shown with dotted lines on Fig 1.

### Example 3

In the system of Example 2, but with a stirring speed of 200 to 250 rpm, 0.3 M zinc chloride and 0.1 M ammonium carbamate (NH₂CO₂NH₄) solutions were simultaneously added to the reactor through respective glass conduits at respective addition rates of 0.5 and 0.7 l/h. Carbamate is stable in solution on its own but breaks down via metal catalysis to liberate reactively available carbon dioxide and ammonia in solution.

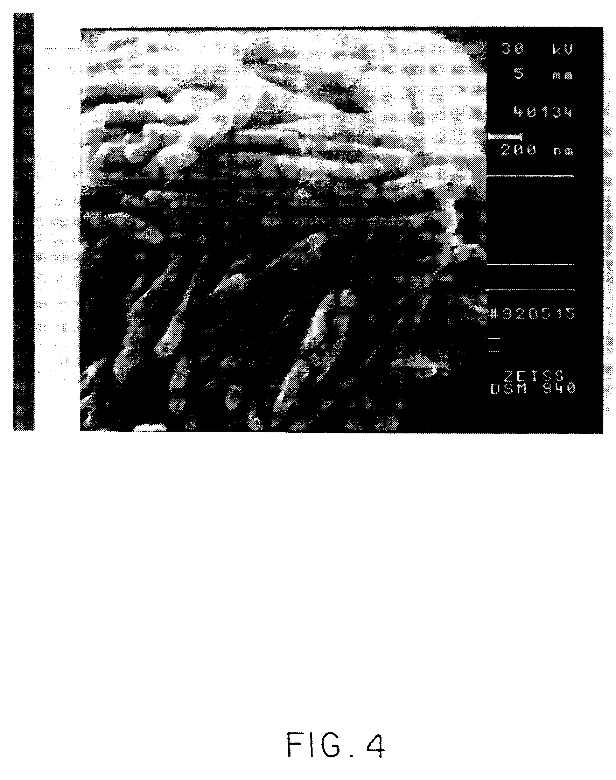

The resultant precipitate was separated and prepared for SEM as above. These process conditions produced a fibre morphology, as shown in the micrograph in Fig 4. The fibres display an homogenous size distribution between 10 to 50 nm in diameter and 50 to 500 nm in length.

### Example 4

In the reactor conditions of Example 2, but with the stirring speed within 150 to 175 rpm, 0.2 M zinc chloride and 0.1 M oxalic acid were simultaneously added to the reactor at respective rates 0.5 and 0.8 l/h. The precipitate was recovered as per Example 2, but at a calcination temperature of 125 °C. Electron microscopy of the resultant powder showed spherical particles with diameters within the range 50 to 150 nm. Rod morphologies can also be deposited using this reagent system.

### Example 5

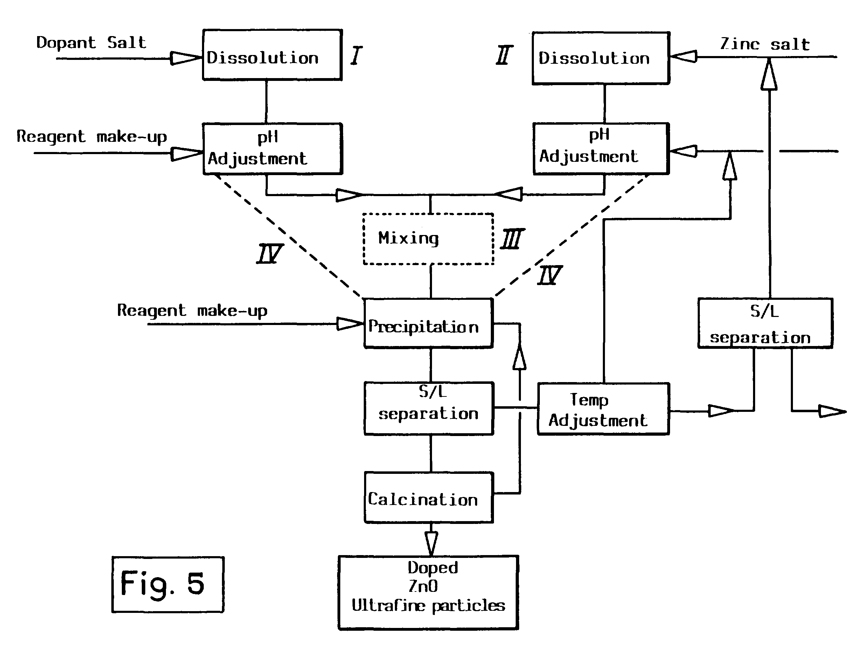

Referring now to Fig 5, a scheme for the production of doped zinc oxide particles is shown. In this scheme, 2 separate metal solutions, the first a zinc ion solution (I, at the top, left) and the second a dopant metal ion solution (II, top, right) are prepared and separately pH and temperature adjusted.

In a first process variant leading to an homogeneous dopant/zinc precipitate, the respective metal ion solutions are mixed (III) and introduced to the mother liquor together. In this fashion, the resultant precipitate complex comprises an intimate co-precipitate of dopant and zinc, the proportions of each reflecting their respective concentrations in the mixed input stream. As with the earlier described Examples pH and temperature feedback loops (IV,IV') can be provided to maintain optional reaction conditions during the precipitation, in particular when it is desired to take account of the differing solubilities of zinc and dopant metal ions at different pHs to assist in regulating proportionality of deposition of the respective metals.

In a second process variant the mixing of metal ion solutions I and II is avoided and the respective solutions are admitted to the reactor sequentially. The resultant precipitate comprises an initially precipitated zinc complex core surrounded by a layer of dopant ion complex.

Again, the pH control of the respective metal solutions may take advantage of the differing solubities of the respective metals at different temperatures.

In each case, the respective precipitates are separated and calcined in similar fashion to the above described Examples to produce doped ZnO particles of defined size and morphology.

### Example 6

The first process variant of Example 5 was used to produce a mixed coprecipitate of metastable Zn and Bi carbonates.

The reactor system of example 1 was charged with distilled water and the pH initially adjusted to 8 - 11 with dilute ammonia solution. A first solution was prepared by mixing 0.3 M ZnCl₂ and 0.01 M Bi(NO₃)₃ in the ratio 3:1, the ratio being adjusted with reference to the desired composition of the end product oxide. A second solution comprised 0.1 M NH₄HCO₃.

The first and second solutions were added dropwise to the aqueous system and the pH carefully maintained at the initial value by dropwise addition of the dilute ammonia solution during vigourous agitation. A composite consisting essentially of metastable zinc and bismuth carbonates was coprecipititated and calcined to obtain a very homogenous mixture of ZnO and Bi₂O₃ having the above defined particle size and distribution.

A variant of this process uses a dual dopant oxide solution, in particular with a solution of Bi and Sb to produce a trimetal coprecipitate.

### Example 7

The second process variant of Fig 5 was used to produce a coprecipitate of ZnO and Al₂O₃ suitable for electronic applications.

The water charged reactor system of Example 1 was pH adjusted to between 8 and 10. With reference to Fig 5, a zinc core precipitate was first produced by dropwise addition of a solution II consisting of 0.3 M ZnCl₂ and a separate carbonate source solution comprising 0.1 M NH₄HCO₃. The pH was controlled via the feedback loop with small additions of dilute ammonia to the vigourously agitated aqueous solution.

Referring again to Fig 5, solution I comprised 0.1 M Al(NO₃)₃ which was subsequently precipitated onto the suspended zinc precipitate core. Calcination of the mixed precipitate provided an uniform powder of biphase aluminium oxide on zinc oxide appropriate for semiconducting roles, for example conventional compression sintering to form varistors.

This reagent system can also be used in the process variant of Example 6, for example at a 5:1 ratio of the Zn:Al solutions to form an homogenous coprecipitate.

## Claims

1. Elongate zinc oxide particles, characterized by having a substantially circular cross section, a diameter in the range 10 to 150 nm, preferably 50 to 100 nm, an axial length in the range 50 to 1,500 nm, preferably 70 to 200 nm and an aspect ratio of 2 or more.

2. Zinc oxide particles according to claim 1 characterized in that 75 % or more of the particles are substantially similar in size.

3. A method for the production of elongate zinc oxide particles according to claim 1, in which zinc ions, ammonium ions and a carbonate source are brought into mutual contact in an aqueous solution to form a precipitate, the resultant precipitate is separated and optionally calcined to zinc oxide, characterised in that a metastable precipitate is formed in which the morphology and size of the particles is controlled by providing prior to and during precipitation:
a temperature between 10 and 40 °C;
a pH initially set between 5 and 10;
the zinc ion and/or carbonate source being progressively made available to the solution to control the precipitation rate, and to be able to achieve ultrafine particles, the ammonium to carbonate source ratio is also controlled to approach unity to enhance metastability in the precipitated products.

4. A method according to claim 3, further comprising the step of calcining the precipitate to form zinc oxide particles.

5. A method according to claim 4 wherein the calcination temperature is within the range 125 - 340 °C, preferably 200 - 270 °C.

6. A method according to any one of claims 3 to 5, wherein the temperature is maintained between 15 to 30 °C, preferably between 20 to 22 °C, during precipitation.

7. A method according to any one of claims 3 to 6,
wherein the separation step comprises spray drying, optionally in conjunction with neutralization of the surface charge of the particles.

8. A method according to claim 4 wherein the separation and calcination steps are performed by spray roasting.

9. A method according to any one of claims 3 to 8 wherein the carbonate source comprises gaseous carbon dioxide or an agent which liberates carbon dioxide in situ.

10. A method according to claim 9 wherein the agent comprises ammonium carbamate.

11. A method according to any one of claims 3 to 8 wherein the carbonate source comprises an ammonium bicarbonate, carbonate, malate, succinate or oxalate.

12. A method according to any one of claims 3 to 11, wherein the initially set pH is maintained by the addition of dilute reagents during vigourous stirring.

13. A method according to claim 12 wherein the reagent comprises an aqueous ammonia solution, preferably a 5 to 10 % ammonia solution.

14. A method according to any one of claims 3 to 13, further comprising the step of co-precipitating a dopant metal.

15. A method according to claim 14 wherein the dopant metal is simultaneously coprecipitated with the zinc to form an intimately admixed zinc and dopant precipitant.

16. A method according to claim 15 wherein solutions of the dopant metal and the zinc are mixed prior to contact with the carbonate source.

17. A method according to claim 14 wherein the dopant metal is subsequently precipitated onto a zinc precipitate core.

18. A method according to any one of claims 14 to 17 wherein the dopant metal comprises yttrium, aluminium, gallium, platinum, bismuth, a lanthanide,curium, molybdenum, nickel, cobalt, antimony, chromium or other group III-VII metal.

## Patentansprüche

1. Längliche Zinkoxid-Teilchen, dadurch gekennzeichnet, daß sie einen im wesentlichen kreisförmigen Querschnitt, einen Durchmesser im Bereich von 10 bis 150 nm, vorzugsweise von 50 bis 100 nm, eine axiale Länge im Bereich von 50 bis 1.500 nm, vorzugsweise im Bereich von 70 bis 200 nm, und ein Seitenverhältnis von 2 oder mehr aufweisen.

2. Zinkoxid-Teilchen nach Anspruch 1, dadurch gekennzeichnet, daß 75 % oder mehr der Teilchen in Bezug auf die Größe im wesentlichen ähnlich sind.

3. Verfahren zur Herstellung länglicher Zinkoxid-Teilchen nach Anspruch 1, in dem Zink-Ionen, Ammonium-Ionen und eine Carbonat-Quelle in einer wäßrigen Lösung m gegenseitigen Kontakt gebracht werden und so ein Niederschlag gebildet wird, der resultierende Niederschlag abgetrennt wird und gegebenenfalls zu Zinkoxid calciniert wird, dadurch gekennzeichnet, daß ein metastabiler Niederschlag gebildet wird, in dem die Morphologie und Größe der Teilchen dadurch gesteuert wird, daß man vor und während der Fällung einstellt:
- eine Temperatur zwischen 10 und 40 °C;
- einen pH-Wert, der anfänglich auf einen Wert zwischen 5 und 10 eingestellt wird;
wobei die Zink-Ionen und/oder die Carbonat-Quelle der Lösung schrittweise verfügbar gemacht wird/werden, um die Fällungsgeschwindigkeit zu steuern und in der Lage zu sein, ultrafeine Teilchen zu erhalten, und wobei das Verhältnis Ammonium zu Carbonat-Quelle auch so gesteuert wird, daß es sich dem Wert 1 annähert, und so die Metastabilität in den gefällten Produkten erhöht wird.

4. Verfahren nach Anspruch 3, welches weiter den Schritt des Calcinierens des Niederschlags unter Bildung von Zinkoxid-Teilchen umfaßt.

5. Verfahren nach Anspruch 4, worin die Calcinier-Temperatur im Bereich von 125 bis 340 °C liegt, vorzugsweise im Bereich zwischen 200 und 270 °C.

6. Verfahren nach einem der Ansprüche 3 bis 5, worin die Temperatur während der Fällung zwischen 15 und 30 °C gehalten wird, vorzugsweise zwischen 20 und 22 °C.

7. Verfahren nach einem der Ansprüche 3 bis 6, worin der Abtrenn-Schritt einen Schritt des Sprühtrocknens umfaßt, gegebenenfalls zusammen mit einer Neutralisation der Oberflächenladung der Teilchen.

8. Verfahren nach Anspruch 4, worin die Schritte des Abtrennens und Calcinierens durch Sprührösten durchgeführt werden.

9. Verfahren nach einem der Ansprüche 3 bis 8, worin die Carbonat-Quelle gasförmiges Kohlendioxid oder ein Mittel umfaßt, das Kohlendioxid in situ freisetzt.

10. Verfahren nach Anspruch 9, worin das Mittel Ammoniumcarbamat umfaßt.

11. Verfahren nach einem der Ansprüche 3 bis 8, worin die Carbonat-Quelle ein Ammoniumbicarbonat, -carbonat, -malat, -succinat oder -oxalat umfaßt.

12. Verfahren nach einem der Ansprüche 3 bis 11, worin der anfänglich eingestellte pH-Wert durch Zugabe verdünnter Reagenzien während eines kräftigen Rührens aufrechterhalten wird.

13. Verfahren nach Anspruch 12, worin das Reagenz eine wäßrige Ammoniak-Lösung umfaßt, vorzugsweise eine 5- bis 10-%ige Ammoniak-Lösung.

14. Verfahren nach einem der Ansprüche 3 bis 13, welches weiter den Schritt des Copräzipitierens eines Dotierungsmetalls umfaßt.

15. Verfahren nach Anspruch 14, worin das Dotierungsmetall gleichzeitig mit dem Zink copräzipitiert wird und so ein innig gemischter Zink- und Dotierungsmittel-Niederschlag gebildet wird.

16. Verfahren nach Anspruch 15, worin Lösungen des Dotierungsmetalls und des Zinks vor dem Kontakt mit der Carbonat-Quelle gemischt werden.

17. Verfahren nach Anspruch 14, worin das Dotierungsmetall anschließend auf einen Zink-Niederschlags-Kern gefällt wird.

18. Verfahren nach einem der Ansprüche 14 bis 17, worin das Dotierungsmetall umfaßt: Yttrium, Aluminium, Gallium, Platin, Bismuth, ein Lanthanid, Curium, Molybdän, Nickel, Cobalt, Antimon, Chrom oder ein anderes Metall der Gruppen III bis VII.

## Revendications

1. Particules d'oxyde de zinc oblongues, caractérisées en ce qu'elles ont une section transversale sensiblement circulaire, un diamètre de l'ordre de 10 à 150 nm, de préférence de 50 à 100 nm, une longueur axiale de l'ordre de 50 à 1500 nm, de préférence de 70 à 200 nm et un rapport de leur plus grande dimension à leur plus petite dimension de 2 ou de plus de 2.

2. Particules d'oxyde de zinc suivant la revendication 1, caractérisées en ce que 75% ou plus de 75% des particules ont sensiblement la même taille.

3. Procédé de préparation de particules d'oxyde de zinc oblongues suivant la revendication 1, qui consiste à mettre des ions zinc, des ions ammonium et une source de carbonate en contact mutuel dans une solution aqueuse pour former un précipité, à séparer le précipité obtenu et éventuellement à le calciner en oxyde de zinc, caractérisé en ce qu'il consiste à former un précipité métastable dans lequel la morphologie et la dimension des particules sont réglées en prévoyant avant et pendant la précipitation:
une température comprise entre 10 et 40°C;
un pH fixé initialement entre 5 et 10;
l'ion zinc et/ou la source de carbonate étant rendus progressivement disponible à la solution pour régler la vitesse de précipitation et, pour être en mesure d'obtenir des particules ultrafines, le rapport de l'ammonium à la source de carbonate étant également réglé pour tendre vers l'unité afin d'augmenter la métastabilité des produits précipités.

4. Procédé suivant la revendication 3, qui consiste en outre à effectuer le stade de calcination du précipité pour former des particules d'oxyde de zinc.

5. Procédé suivant la revendication 4, dans lequel la température de la calcination est comprise entre 125 et 340°C, de préférence entre 200 et 270°C.

6. Procédé suivant l'une quelconque des revendications 3 à 5, dans lequel la température est maintenue entre 15 et 30 °C, de préférence entre 20 et 22°C pendant la précipitation.

7. Procédé suivant l'une quelconque des revendications 3 à 6, dans lequel le stade de séparation comprend un séchage par pulvérisation, éventuellement de pair avec une neutralisation de la charge superficielle des particules.

8. Procédé suivant la revendication 4, dans lequel les stades de séparation et de calcination sont effectués par grillage par pulvérisation.

9. Procédé suivant l'une quelconque des revendications 3 à 8, dans lequel la source de carbone comprend du dioxyde de carbone gazeux ou un agent qui libère du dioxyde de carbone in situ.

10. Procédé suivant la revendication 9, dans lequel l'agent comprend du carbamate d'ammonium.

11. Procédé suivant l'une quelconque des revendications 3 à 8, dans lequel la source de carbonate comprend du bicarbonate d'ammonium, du carbonate d'ammonium, du maléate d'ammonium, du succinate d'ammonium ou de l'oxalate d'ammonium.

12. Procédé suivant l'une quelconque des revendications 3 à 11, dans lequel le pH fixé initialement est maintenu par l'addition de réactifs dilués sous agitation vigoureuse.

13. Procédé suivant la revendication 12, dans lequel le réactif comprend une solution aqueuse d'ammoniac, de préférence une solution d'ammoniaque à 5 à 10%.

14. Procédé suivant l'une quelconque des revendications 3 à 13, qui comprend en outre le stade de coprécipitation d'un métal dopant

15. Procédé suivant la revendication 14, dans lequel le métal dopant est coprécipité simultanément au zinc pour former un précipite intimement mélangé de zinc et de dopant.

16. Procédé suivant la revendication 15, dans lequel on ajoute des solutions du métal dopant et du zinc avant la mise en contact avec la source de carbonate.

17. Procédé suivant la revendication 14, dans lequel le métal dopant est précipité ensuite sur un noyau de précipité en zinc.

18. Procédé suivant l'une quelconque des revendications 14 à 17, dans lequel le métal dopant comprend de l'yttrium, de l'aluminium, du gallium, du platine, du bismuth, un lanthanide, du curium, du molybdéne, du nickel, du cobalt, de l'antimoine, du chrome ou un autre métal des groupes III-VII.
